# EUROPÄISCHE PATENTANMELDUNG

(11) **EP 0 977 333 A1**
(43) Veröffentlichungstag der Anmeldung: **02.02.2000**
(21) Anmeldenummer: 99114668.9
(22) Anmeldetag: 27.07.1999
(51) Int. Cl.: H02G 1/14, H02G 15/113

(54) **Verfahren zur Herstellung einer vergossenen Kabelverbindung sowie Giessform zur Durchführung des Verfahrens und Kabelverbindung ohne verbleibende Giessform**

(30) Priorität: 31.07.1998 CH 161898
(71) Anmelder: Albrecht, Joachim E., 8048 Zürich (CH)
(72) Erfinder: Albrecht, Joachim E., 8048 Zürich (CH)
(74) Vertreter: EGLI-EUROPEAN PATENT ATTORNEYS

(57) **Zusammenfassung**

Das Verfahren zur Herstellung einer vergossenen wasserdichten Kabelverbindung mit zwei oder mehr Kabelzuführungen mit einer Giessform (1) und einer in die Giessform einzufüllenden Füllmasse verwendet eine Giessform (1), die mehrfach wiederverwendbar ist und nach dem Einfüllen und Aushärten der Füllmasse wieder entfernt wird. Dabei besteht die Giessform (1) ganz oder teilweise aus Materialien, die mit der Füllmasse keine haftende Verbindung eingehen oder es wird ein Trennmittel, beispielsweise eine Kunststoffolie (2), in die Giessform (1) eingebracht, um einen direkten Kontakt zwischen der Füllmasse und dem Material der Giessform zu verhindern. Der Vorteil besteht vor allem darin, dass nur ein Minimum an Materialien benötigt wird. Insgesamt ergibt sich eine beträchtliche Reduktion an Abfall, Verpackung, Gewicht und Volumen, womit eine verbesserte Enerhie- und Umweltbilanz einhergeht.

## Beschreibung

Die Erfindung betrifft ein Verfahren zur Herstellung einer vergossenen Kabelverbindung, insbesondere zum Verbinden und Abzweigen elektrischer Kabel, gemäss Patentanspruch 1, sowie eine Giessform zur Durchführung des Verfahrens gemäss Patentanspruch 13 sowie eine vergossene Kabelverbindung ohne verbleibende Giessform gemäss Patentanspruch 23.

Vergossene Kabelverbindungen der genannten Art werden insbesondere im Bereich erdverlegter elektrischer Kabel besonders häufig verwendet. Zur Herstellung derartiger Kabelverbindungen werden Giessformen aus Metall oder Kunststoff eingesetzt, die vor Ort um die Spleissstelle der elektrischen Kabel gelegt und anschliessend mit einem geeigneten isolierenden Füllstoff ausgegossen werden. Als Füllstoffe bzw. Isolationsmaterial werden dabei zumeist flüssige, pastenförmige oder pulvrige Formstoffe entsprechend DIN VDE 0291 verwendet. Heute ist dies aus wirtschaftlichen Gründen vorwiegend Polyurethan (PU). Früher wurde als Füllstoffe auch Heiss-Vergussmassen, Epoxydharze und geschäumte Formstoffe eingesetzt, wobei die letzteren vor allem wegen den ungünstigeren elektrischen und thermischen Eigenschaften nicht mehr verwendet werden.

Muffenkörper für vergossene Kabelverbindungen werden beispielsweise für Abzweigmuffen von Starkstromkabeln oder für Hausanschlussmuffen benutzt. Bei letzteren führt das Stammkabel in ein Ende des Muffenkörpers hinein und aus einem anderen Ende wieder heraus. Das Abzweigkabel, das im Inneren der Muffe mit dem Stammkabel verbunden ist, tritt gemeinsam mit dem Stammkabel aus der grösseren der beiden Muffenöffnungen aus. Im Innern der Muffe befinden sich die mechanischen und elektrischen Verbindungselemente, mit denen das Abzweigkabel an das Stammkabel angeschlossen ist. Das Innere des Muffenkörpers wird mit einer Vergussmasse aufgefüllt, so dass die Verbindungsstelle der beiden Kabel wasserdicht und hermetisch verschlossen ist. Während des Einfüllens der Vergussmasse und bis zu deren Erhärten bildet der Muffenkörper die Giessform und sorgt für mechanische Festigkeit.

Der Nachteil bestehender Lösungen dieser Art liegt darin, dass die bisher verwendeten Materialien für die Giessform und diejenigen für den Füllstoff nach den Ausgiessen und Aushärten des Füllstoffes aneinander haften, so dass die verwendete Giessform bei der fertigen ausgegossenen Kabelverbindung verbleibt bzw. jeweils Bestandteil der fertigen ausgegossenen Kabelverbindung bzw. des fertigen Muffenkörpers wird und somit als 'verlorene Giessform' zu betrachten ist. Aus Gründen der mechanischen Widerstandsfähigkeit der fertigen ausgegossenen Kabelverbindung ist dieser Effekt oft sogar erwünscht, er bedeutet aber auch unnötigen Materialverlust.

Aus der DE-23 40 759 ist ein Verfahren zum Abdichten von längs- oder quergeteilten Verbindungs- oder Abzweigmuffen bekannt, worin eine 'wiederverwendbare' äussere Schäumform beschrieben ist. Die Spleissverbindung der elektrischen Kabel ist dabei in einem Hohlraum angeordnet der durch Halbschalen gebildet ist. Die Halbschalen werden von Distanzhaltern zentrisch in der äusseren Schäumform gehalten, wobei der Zwischenraum zwischen den Halbschalen und der äusseren Schäumform mit geschäumtem Polyurethan ausgefüllt ist. Die Halbschalen sind ebenfalls zur Wiederverwendung vorgesehen, es wird aber ausdrücklich erwähnt, dass zur Erreichung dieses Zieles die zu umschäumenden Halbschalen vorher mit weiteren isolierenden Halbschalen aus kaschierter Alufolie oder solchen aus einer geeigneten Kunststoffolie umkleidet werden müssen, um eine haftende Verbindung zwischen den Halbschalen und dem geschäumten Polyurethan zu verhindern. Es wird nicht erwähnt, aus welchem Material eine geeignete Kunststoffolie bestehen könnte. Trotz der beschriebenen 'Wiederverwendbarkeit' der Halbschalen handelt es sich hier um "verlorene Halbschalen", da diese in der fertigen Muffe verbleiben. Die 'Wiederverwendbarkeit' der äusseren Schäumform wird zwar erwähnt, allerdings werden keine Mittel gezeigt, die die haftende Verbindung zwischen dem geschäumten Polyurethan und der äusseren Schäumform verhindern. In der Schrift wird zudem darauf hingewiesen, dass mit dem Einspritzen des geschäumten Polyurethans in die Schäumform der Herstellungsprozess des Muffenkörpers beendet sei.

Da bei der DE-23 40 759 die behauptete "Wiederverwendbarkeit' der äusseren Schäumform mit den gezeigten Mitteln und Verfahrensschritten nicht realisierbar ist, handelt es sich ebenfalls um ein Verfahren zur Herstellung eines Muffenkörpers mit einer "verlorenen Giessform". Insgesamt ist das dargelegte Verfahren wegen des zu erstellenden Hohlraumes für die Spleissverbindungen ziemlich aufwendig. Wegen der vergleichsweise geringen mechanischen Festigkeit einer relativ dünnen geschäumten Polyurethanschicht um einen Hohlraum bestehen bei dieser Bauweise sogar gute Gründe, die Giessform Bestandteil des fertigen Muffenkörpers bleiben zu lassen. Der Muffenkörper gemäss DE-23 40 759 ist zudem ausschliesslich in absolut trockenen Umgebungen einsetzbar, da sich sonst im Hohlraum zwischen den inneren Halbschalen in kurzer Zeit Wasser ansammelt, was zu elektrischen Ueberschlägen und somit unweigerlich zum Ausfall des elektrischen Systems führt. Ein auf Schaumbasis bestehender Füllstoff ist aus dem bereits früher erwähnten Grund für derartige Anwendungen ebenfalls nicht geeignet, da wegen den Lufteinschlüssen im Vergleich zu massiv ausgegossenen Füllstoffen erheblich erhöhte elektrische Ueberschlagsgefahr besteht.

Die Aufgabe der vorliegenden Erfindung liegt darin, ein Verfahren und eine Giessform zur Durchführung des Verfahrens anzugeben, die eine einfache, materialsparende und wasserdichte Herstellung einer vergossenen Kabelverbindung ermöglichen. Ausserdem soll eine nach dem Verfahren hergestellte Kabelverbindung zur Verfügung gestellt werden.

Diese Aufgabe wird durch die in den Kennzeichen der Patentansprüche 1, 13 und 23 angegebenen Merkmale gelöst.

Die Lösung verwendet eine mehrfach wiederverwendbare Giessform, die nach dem Einfüllen und Aushärten der Giessmasse entfernt wird und die eine der geometrischen Form der einzugiessenden Teile angepasste und das Volumen der Füllmasse optimierende Formgebung aufweist. Auf diese Weise wird erreicht, dass ein Minimum an Füllmasse verwendet werden muss, dass aber trotzdem den mechanischen Festigkeitsanforderungen und den elektrischen Isolationsanforderungen Genüge getan ist.

Bisher verwendete Materialkombinationen aus Metallen oder Kunststoffen für die Giessform gehen zusammen mit der Giessmasse beim Vergiessen eine haftende Verbindung ein. Heute sind jedoch Kunststoffkombinationen bekannt, die beim Vergiessen keine haftende Verbindung eingehen und sich auch ohne weiteres wieder von einander lösen lassen. Wird eine solche Materialkombination verwendet, so müssen keine separaten Trennschichten mehr vorgesehen werden. Materialkombinationen die keine haftende Verbindung eingehen sind beispielsweise Teflon und Polyurethan. Es können also auch entsprechend beschichtete Giessformen eingesetzt werden. Wird keine spezielle Giessform dieser Art eingesetzt, so können zur Vermeidung haftender Verbindungen dünne Trennschichten vorgesehen sein. Solche Trennschichten bestehen vorteilhafterweise aus dünnen Kunststoffolien. Diese Folien - die selber natürlich ohne weiteres aus einem Material bestehen können, das mit der Vergussmasse eine haftende Verbindung eingeht - können nach dem Ausgiessen in der Regel auch an ihrem Einsatzort verbleiben, da sich ein Entfernen wohl nur in seltenen Fällen lohnt. Trennschichten oder Trennmittel müssen zudem auch nicht notwendigerweise in der Form einer Folie vorliegen. Trennmittel können beispielsweise in den folgenden Formen realisiert werden:
- Mechanische Trennmittel in der Form von vorgeformten oder ungeformten Folien, z.B. aus Kunststoff, Metall, Papier oder Latex. Sie werden in die Giessform eingelegt, mechanisch positioniert und trennen Giessform vom Füllstoff. Die Vorformung kann durch Schweissen, Blasen, Spritzen oder eine andere Konfektionierung entstehen.
- Chemische Trennmittel in öliger, fettiger, pulvriger oder pastenförmiger Form. Diese Trennmittel können durch Sprayen, Spritzen, Pinseln, Tauchen oder Ähnlichem auf die Giessform aufgebracht werden. Diese Trennmittel können für einfache oder mehrfache Anwendung ausgelegt sein.
- Füllstoff-abweisende Beschichtungen der Giessform wie Teflon und teflonähnliche sowie andere Nass- oder Pulverbeschichtungen.
- Metallurgische Ausführungen der Giessform durch entsprechende Werkstofftechnologie; vorzugsweise in Sintertechnik.

Bei den letzteren beiden Techniken werden die Dichtungen mit separaten Trennmitteln versehen.

Giessformen die eine geometrische Form aufweisen, die zumindest teilweise an die Form der einzugiessenden Teile angepasst sind, sind beispielsweise aus der DE-30 35 183 bekannt. Allerdings handelt es sich hier ebenfalls um "verlorene Giessformen" die Bestandteil des fertigen Muffenkörpers bilden.

Die Vorteile der erfindungsgemässen Herstellung einer vergossenen Kabelverbindung bestehen also hauptsächlich in der erzielten Materialeinsparung. Insgesamt ergibt sich eine beträchtliche Reduktion an Abfall, Verpackung, Gewicht und Volumen.

Da die heute übliche massive 'verlorene' Muffenform durch eine mehrfach wiederverwendbare Giessform ersetzt wird, wird das Liefervolumen der Muffe nur noch durch die Grösse des Füllstoffgebindes bestimmt. Dadurch lässt sich eine Reduktion des Liefervolumens auf etwa 20 - 30 Prozent des heute Üblichen erzielen. Gesenkt werden dadurch auch die Logistikkosten, da eine sehr viel kleineres Gewicht und ein sehr viel kleineres Volumen transportiert und gelagert werden muss. Zudem stellt sich infolge der Materialeinsparung eine deutliche Verbesserung der Umwelt- und Energiebilanz ein.

Die Giessform besteht vorzugsweise aus zwei oder mehr zusammensetzbaren und/oder gelenkig zusammenklappbaren Teilformen oder Formhälften. Eine zusammensetzbare Giessform kann insbesondere bei Platzmangel um die zu kapselnde Kabelverbindung zusammengesetzt und nach dem Ausgiessen zerlegt werden. Gelenkig zusammenklappbare Teilformen oder Formhälften sind aufgeklappt über der zu kapselnden Stelle plazierbar bzw. von der gegossenen Muffe abziehbar. Wegen der komplexen Form der Muffe kann es jedoch auch dann vorteilhaft sein, die Teilformen oder Formhälften beim Abziehen der Giessform voneinander zu trennen.

Bevorzugt hat die Giessform ein Steckscharnier, das sowohl das Zusammensetzen und Trennen der Teilformen als auch deren gelenkiges Zusammenklappen bzw. Auseinanderklappen ermöglicht. Dabei kann es sich insbesondere um ein Steckscharnier handeln, welches von mindestens einer im wesentlichen L-förmigen Stecklasche an einer Teilform und von einer zugeordneten Stecköse an der anderen Teilform gebildet sein kann. Vorzugsweise ist das Steckscharnier durch ein Verriegelungselement gesichert, wobei nur nach einer gezielten Betätigung des Verriegelungselementes eine Trennung der Teilformen oder Formhälften voneinander möglich ist. Hierdurch wird ein unbeabsichtigtes Auseinanderfallen der Giessform bei der Montage verhindert.

Um mit ein- und derselben Giessform Muffen und Kabelverbindungen mit Kabeln verschiedenen Querschnittes bzw. aufzunehmender Komponenten mit verschiedenen Volumina herstellen zu können, kann gemäss einer Ausgestaltung der Erfindung in die Giessform mindestens ein Einsatz eingebracht werden, der auf die jeweils aufzunehmenden Komponenten abgestimmt ist. So kann durch ein oder mehrere Einsätze ein Mindervolumen gegenüber dem Volumen der aufzunehmenden Komponenten einer Referenzführung ausgeglichen werden. Hierdurch ist es möglich, für sämtliche gängigen Kabelverbindungen mit demselben Giesswerkzeug und derselben Giessharzmenge auszukommen. Dafür können Einsätze vorgehalten werden, die auf die unterschiedlichen gängigen Kabel und sonstigen Komponenten der zu schützenden Verbindung abgestimmt sind.

Ein weiterer Vorteil der neuen Lösung im Vergleich zu bisherigen Lösungen mit "verlorenen" Muffenkörpern bzw. Giessformen liegt im Bereich der Kabelabdichtungen, also in den Bereichen in denen die Kabel in den Muffenkörper ein- oder austreten. Die Dichtungen an den Formenden der Muffenkörper müssen stützende, zentrierende und dichtende Funktion aufweisen, da die unterschiedlichsten Kabelquerschnitte (von dreieckig bis rund oder oval) berücksichtigt werden müssen. Gerade die ungleichmässig geformten Kabelquerschnitte führen bei den bisher gängigen Lösungen (bei denen die Zentrierung und Stützung der Kabel mit Hilfe von Stegen oder anderweitig geformten zusätzlichen Positionierhilfen erfolgt) häufig zu Dichtigkeitsproblemen, bis hin zur Funktionsunfähigeit der Kabelmuffe als Ganzes. Als Kabelabdichtung wird deshalb neu ein elastisches Material verwendet, das eine genügende Grundfestigkeit zur Ausübung der Stütz- und Zentrierfunktion aufweist, beispielsweise Moosgummi. Es können auch feste Schaumstoffe wie Polyätherschäume verwendet werden. Diese Kabelabdichtungen sind Bestandteil der wiederverwendbaren Giessform. Falls die Giessform Formhälften bzw. Teilformen hat, können die Dichtungselemente für eine Wiederverwendbarkeit mehrteilig ausgeführt sein, wobei jeweils ein Dichtungsteil einer Teilform zugeordnet ist. Durch Zerlegen der Form in die Teilformen können dann zugleich die Dichtungsteile von den Kabelzuführungen abgezogen werden. Falls als Trennmittel eine Folie zum Einsatz kommt, deckt diese vorteilhaft die Dichtungselemente ab, um diese vor einem direkten Kontakt mit der Füllmasse zu schützen und damit deren Wiederverwendbarkeit zu ermöglichen. Bei Verfahren mit oder ohne festes Trennmittel (z.B. ohne Folie) zwischen Giessform und Füllmasse können die Kabelabdichtungen zum Erreichen der Wiederverwendbarkeit mit einem Trennmittel, beispielsweise Fett, versehen werden. Ferner besteht die Möglichkeit, dass Dichtungselemente eingesetzt werden, deren Material, Beschichtung und/oder Inhaltsstoff die Füllmasse abweist. Durch die Integration der Kabelabdichtungen in die Giessform wird also auch Dichtungsmaterial eingespart.

Die verlorene Dichtung zwischen dem Stamm- und dem Abzweigkabel kann dagegen aus einem weichen, leicht formbaren Schaumstoff bestehen.

Durch die vorgesehene spezielle Ausgestaltung der Muffen im Bereich der Kabeldichtungen, insbesondere durch den Einsatz eines elastischen und doch genügend festen Materials wie Moosgummi, können in diesen Bereichen die üblichen Dichtungen, die bislang einen kritischen Teil und eine Problemzone hinsichtlich des kurz- und langfristigen Dichtverhaltens bilden, durch ein einfacheres, sichereres und schnelleres Montageverfahren ersetzt werden.

Die Materialien für die Trennmittel, sofern solche eingesetzt werden, beanspruchen für sich nur wenige Gramm Gewicht, was angesichts der insgesamt erzielbaren Materialreduktion nicht von Bedeutung ist.

Die vorliegende Erfindung ist zudem in einem weiten Querschnittsbereich von elektrischen Kabelverbindungen und von der Konzeption her für alle Arten von Muffen (Verbindungen, Abzweige, Uebergänge, usw.) einsetzbar.

Im folgenden wird eine mögliche Ausführung der Erfindung anhand einer Giessform mit einem Trennmittel mit Zeichnungen erläutert. So zeigt
- Fig. 1: eine (teilweise) Seitenansicht einer einsatzbereiten Giessform mit eingelegter Trennfolie,
- Fig. 2: eine Draufsicht der Giessform aus Fig. 1,
- Fig. 3: eine Stirnansicht der Giessform aus Fig. 1 von links (mit Stammkabel und Verbindungskabel)
- Fig. 4: eine Stirnansicht der Giessform aus Fig. 1 von rechts (mit Stammkabel)
- Fig. 5: ein Schnitt A-A durch die Giessform mit eingelegter Trennfolie,
- Fig. 6: ein Schnitt B-B durch die Giessform im Bereich der Stirnseite der Einführung des Stammkabels und des Verbindungskabels,
- Fig. 7: ein zwischen das Stammkabel und das Verbindungskabel einsetzbares Dichtungselement, und
- Fig. 8: eine Seitenansicht der fertig vergossenen Kabelverbindung im entformten Zustand (nach Entfernung der Giessform).

Die in den Figuren dargestellte Giessform ähnelt den Muffenkörpern heute üblicher Bauart. Ihre geometrische Form ist so ausgebildet, dass sie das auszugiessende Volumen optimiert, um mit einem Minimum an Füllstoff auszukommen. Neben der dargestellten Form ist aber auch jede andere geometrische Form denkbar, die den gewünschten Effekt erzielt. Die hier dargestellte Giessform besteht aus zwei geformten Kunststoffschalen. Ebenso ist aber auch eine einteilige Form oder eine mehrteilige Form in Modulbauweise möglich. Ausser aus Kunststoff kann die Giessform auch aus anderen geeigneten Materialien bestehen.

Als Trennmittel zwischen einer Füllmasse 27 und einer Giessform 1 wird im vorliegenden Beispiel eine vorgeformte Kunststoffolie 2 verwendet. Nach Aushärten der Füllmasse 27 zu einem festen Isolationskörper hat die vorgeformte Kunststoffolie 2 ihre Funktion erfüllt. Die gesamte Kabelgarnitur lässt sich danach einfach entformen, durch Öffnen eines Klemmverschlusses 17 und Aufklappen von zwei Formhälften 3 und 4. Die Kunststoffolie 2 kann entweder an der Kabelgarnitur verbleiben oder entfernt und entsorgt werden.

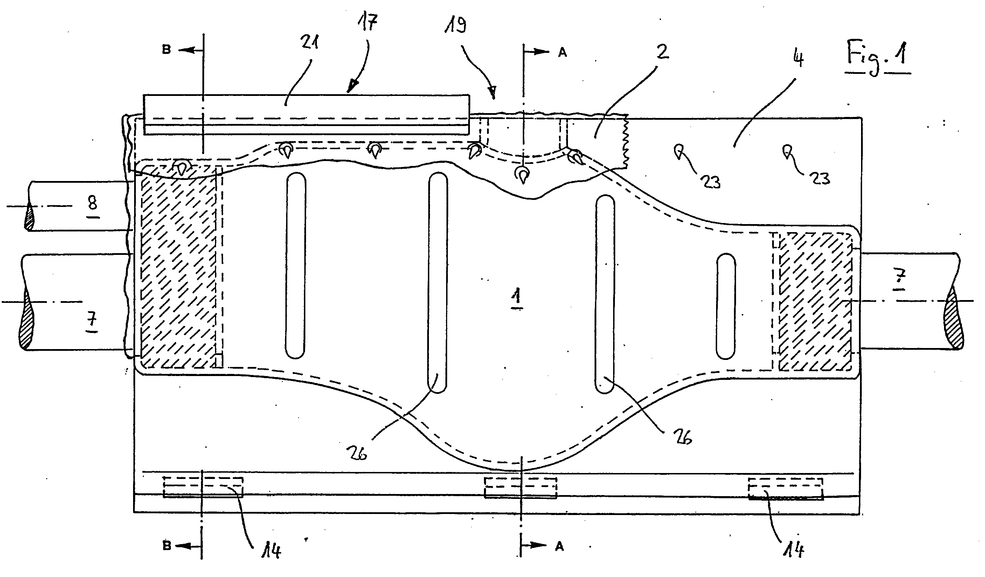

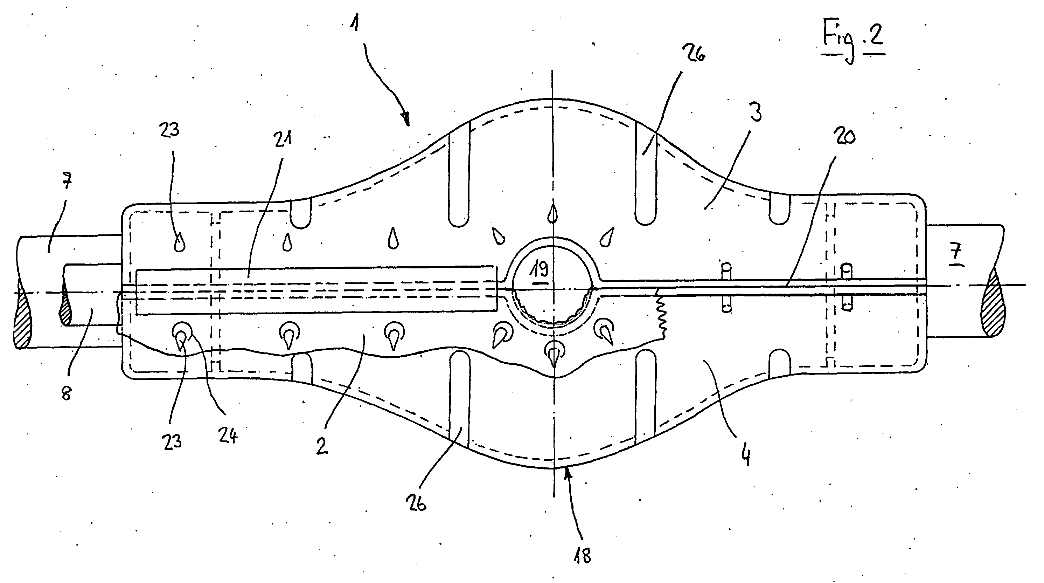

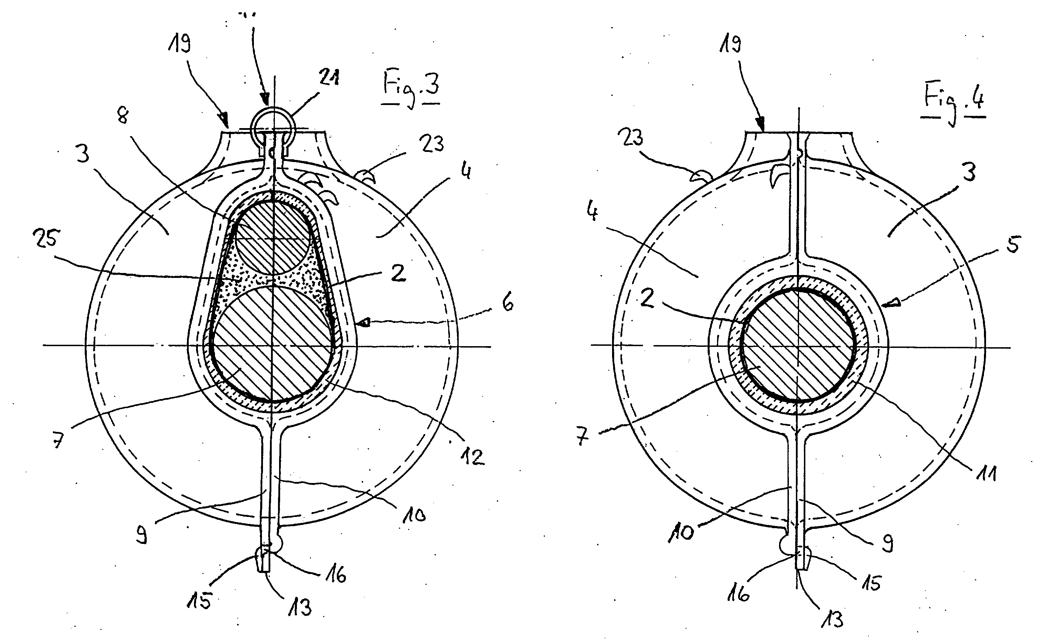

Die beiden Formhälften 3 und 4, die jeweils nach aussen ausgebaucht sind, bilden die Giessform 1 mit einem Hohlraum, der elektrische Komponenten 28 und mechanische Komponenten 29 der Kabelverbindung umschliesst (siehe Fig. 1 und 8). Das eine Ende der Giessform 1 hat eine kreisförmigen Abschlussöffnung 5, durch die ein Stammkabel 7 geführt wird. Das andere Ende der Giessform 1 hat dagegen eine birnenförmige Abschlussöffnung 6, durch die sowohl das Stammkabel 7 wie auch ein Abzweigkabel 8 geführt wird (siehe Fig.1, 3 und 4).

Im Bereich der beiden Abschlussöffnungen 5, 6 befinden sich in jeder Formhälfte 3, 4 entsprechende Teile von Dichtungselementen 11 und 12 aus elastischen aber festen Materialien, die das Stammkabel 7 und das Abzweigkabel 8 fest umschliessen. Der direkte Kontakt zwischen den Dichtungselementen 11, 12 und den Kabeln 7, 8 wird durch die eingelegte Kunststoffolie 2 verhindert. Auf diese Weise wird auch das Austreten der Füllmasse 27 an diesen Stellen verhindert (siehe Fig. 3, 4 und 6).

Die Schalen der Formhälften 3 und 4 erweitern sich zu einem mittleren Abschnitt 18 des Muffenkörpers (in Längsrichtung), wobei der Abschnitt 18 den Bereich des grössten Durchmessers der fertigen Kabelgarnitur repräsentiert. Im Bereich des Abschnitts 18 werden im Innern des Muffenkörpers die elektrischen und mechanischen Komponenten 28 und 29 (Klemm- und Verbindungseinrichtungen) für die Kabel 7, 8 vergossen.

Beide Formhälften 3, 4 haben Unterkanten 13, die im Schliesszustand auf einer gemeinsamen Linie liegen. Die Unterkanten 13 sind durch ein Steckscharnier 14 miteinander form- und kraftschlüssig verbunden. Dazu greifen im vorliegenden Beispiel Nasen 15 der einen Formhälfte 4 in Öffnungen 16 der anderen Formhälfte 3. Beim Schliessen der Giessform 1 presst hält das so gebildete Scharnier die Formhälften 3, 4 zusammen und ermöglicht einen festen und dichten Abschluss. Die Abdichtung auf der Unterseite der Giessform 1 wird jedoch primär durch die eingelegte Kunststoffolie 2 gewährleistet, die ein Auslaufen der Füllmasse 27 nach unten verhindert.

Die Verbindung der beiden Formhälften 3, 4 kann aber auch auf vielfältige andere Art gelöst werden. Auch besteht die Möglichkeit eine einteilige Form zu verwenden, bei der die beiden Formhälften an der Unterkante 13 zum Beispiel mit einem Filmscharnier verbunden sein können.

Ausserhalb der ausgebauchten, den Hohlraum umschliessenden Wandungsteile sind die Wände der beiden Formhälften 3, 4 als ebene Platten 9, 10 ausgebildet, die im Schliesszustand der Giessform 1 flächenhaft aneinanderliegen. Wird als Trennmittel wie im vorliegenden Beispiel eine vorgeformte Kunststoffolie 2 verwendet, sollte die Giessform 1 zum Beispiel mit Perforationen 26 versehen sein, um ein optimales Entweichen der Luftmenge zwischen Giessform 1 und Kunststoffolie 2 während des Ausgiessvorganges zu gewährleisten und so allseitig die geforderte Isolationsstärke der Füllmasse sicherzustellen. Statt Perforationen können auch Entlüftungskanäle vorhanden sein, die beispielsweise durch eine Trennebene zwischen Teilformen der Giessform verlaufen.

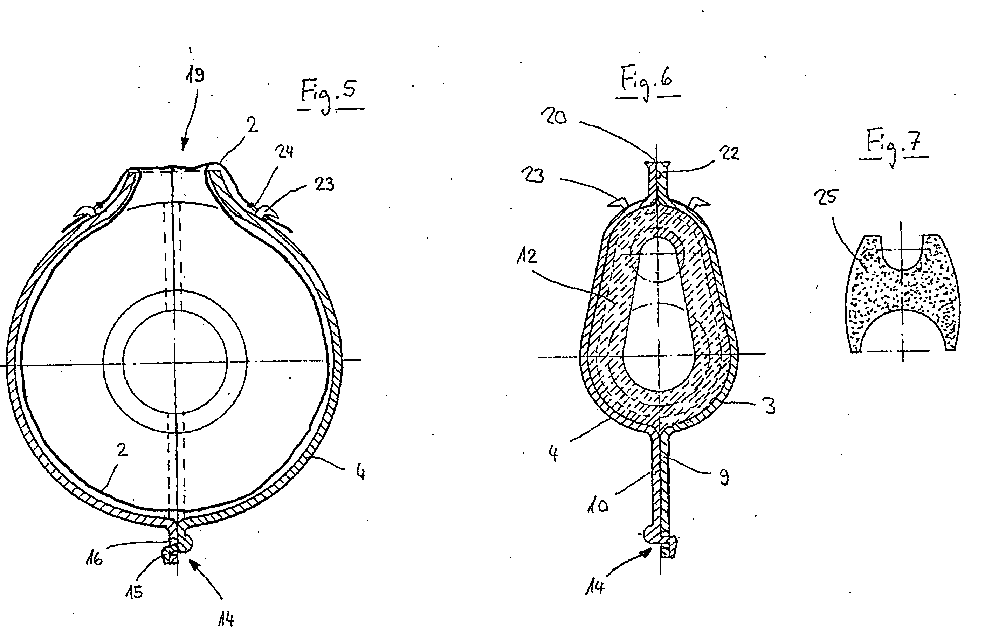

An der Oberkante der Formhälften 3, 4 befindet sich ein definierter Einfüllstutzen 19 für die Füllmasse 27. Beiderseits der durch den Einfüllstutzen 19 gebildeten Einfüllöffnung ist die Oberkante der Formhälften 3, 4 - beim vorliegenden Beispiel - zu einem Abschlusssteg 20 ausgebildet. Um das Auslaufen des Füllstoffes zu verhindern sind in den Stegteilen ineinandergreifende Dichtungsgeometrien 22 eingearbeitet, welche zum Beispiel durch Schaumstoff- oder Gummileisten unterstützt werden können (siehe dazu auch Fig. 3 und 6). Die Abschlussstegteile werden von je einer Klemmschiene 21 - zu beiden Seiten des Einfüllstutzens 19 - zusammengehalten. Die Klemmschienen 21 pressen die Formhälften 3, 4 dicht zusammen und verhindern das unbeabsichtigte Öffnen der Formhälften 3, 4 während des Einfüll- und Aushärtungsvorganges.

Es ist durchaus möglich, anstatt der Klemmschienen 21 eine Anzahl an der Giessform angebrachte Klemm- oder Verriegelungsmechanismen zu verwenden, wie beispielsweise: Kniehebel, Verriegelungselemente, Bajonettverschlüsse, gurtähnliche Verschlüsse, Verschraubungen oder dergleichen. Wichtig ist, dass die als Trennmittel eingesetzte, vorgeformte Kunststoffolie 2 mit den beiden Formhälften 3, 4 eng verpresst wird um eine optimale Abdichtung zu erreichen.

Seitlich des Abschlusssteges 20 sind im vorliegenden Beispiel auf beiden Formhälften Noppen 23 angebracht (siehe insbesondere Fig. 2, 5 und 6). Diese Noppen dienen zum Fixieren der Kunststoffolie 2, die als Trennmittel zwischen Füllmasse 27 und Giessform 1 eingesetzt wird.

Die Kunststoffolie 2 selbst ist vorzugsweise vorgeformt. Das Vorformen erleichtert das Anlegen der Folienhaut an die inneren Wandungen der Giessform 1. Am oberen Rand besitzt die Kunststoffolie 2 Aussparungen 24. Die geöffnete, vorgeformte Kunststoffolie 2 wird in die Giessform 1 eingelegt. Die Aussparungen 24 werden über die Noppen 23 gelegt. Dadurch wird die Kunststoffolie 2 am oberen Ende der Giessform 1 fixiert. Durch das Schliessen der Giessform wird die Kunststoffolie 2 an der Oberkante beim Klemmverschluss 17 der Giessform 1 lagestabil verklemmt.

Weiterhin ist der Zuschnitt der Kunststoffolie 2 so ausgebildet, dass
- sie beiderseits aus dem Einfüllstutzen 19 ragt und diesen sauber abschliesst;
- sie längsseitig, gemeinsam mit den Kabeln 7, 8 aus den Abschlussöffnungen 5 und 6 der Giessform herausragt. Durch die Dichtungselemente 11 und 12 wird die Kunststoffolie 2 fest gegen die Kabel 7, 8 und das einschiebbare Dichtungselement 25 gepresst, wodurch das Auslaufen der noch nicht verfestigten Füllmasse 27 verhindert wird.

Die erwähnten Dichtungen 11 und 12 an den Abschlussöffnungen 5 und 6 bestehen aus einem elastischen, kompressiblen, aber doch genügend festen Material, wie zum Beispiel "Moosgummi" oder Polyätherschäume. Die Elastizität und Kompressibilität braucht es zur hinreichenden Abdichtung. Die genügende Festigkeit braucht es zur Stützung und zur Zentrierung über den Kabeln 7, 8. Die Wandstärke der Dichtungselemente 11, 12 ist dabei so ausgebildet, dass mit der gleichen Giessform 1 Kabel 7, 8 unterschiedlicher Durchmesser umschlossen werden können (siehe dazu auch Fig. 3 und 6). Der Toleranzbereich der jeweiligen Kabeldurchmesser ist für jede Giessformgrösse definiert.

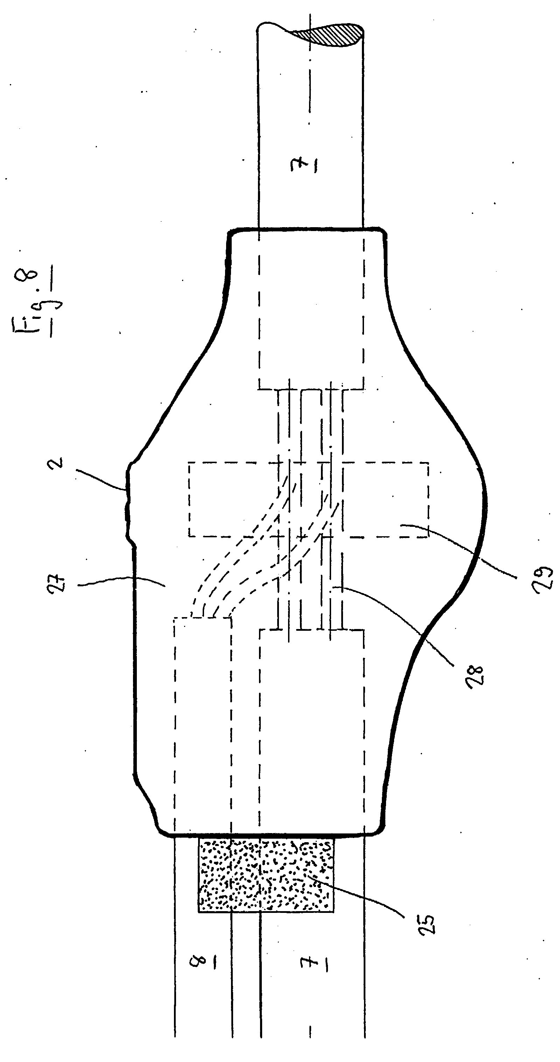

Der Zwischenraum zwischen dem Stammkabel 7 und dem Abzweigkabel 8 wird durch ein einschiebbares Dichtungselement 25 geschlossen - siehe dazu Fig. 7. Das einschiebbare Dichtungselement 25 besteht aus weichem Schaumstoff mit zwei entsprechend geformten Ausschnitten für die Kabel 7, 8. Das Dichtungselement 25 wird zwischen Stammkabel 7 und das Abzweigkabel 8 geschoben und liegt im vorliegenden Beispiel dicht an der Kunststoffolie 2 an. Es wird beim Schliessen der Giessform durch die Dichtung 12 formschlüssig zusammengepresst. Dadurch wird das Auslaufen der Füllmasse 27 an dieser Stelle verhindert. Im Inneren des durch die Kunststoffolie 2 umschlossenen Raumes und hinter dem einschiebbaren Dichtungselement 25 härtet die Füllmasse 27 rund um die Kabel 7, 8 sowie die elektrischen und mechanischen Komponenten 28, 29 aus und bildet somit eine wasserdichte, überschlagsfreie Isolation der Kabelgarnitur.

Wegen der innenliegenden Kontaktfläche des einschiebbaren Dichtungselementes 25 mit der Füllmasse 27 verbleibt das Dichtungselement 25 im vorliegenden Beispiel nach dem Entformen gemeinsam mit der Kunststoffolie 2 bei der fertigen Kabelgarnitur (siehe dazu Fig. 8). Die fertige Kabelgarnitur verzichtet somit auf den bis anhin erforderlichen Muffenkörper und reduziert sich auf die technisch und funktional erforderliche Isolation. Die Giessform 1 selbst steht für den nächsten Arbeitsgang wieder zur Verfügung. Beim beschriebenen Beispiel mit der Kunststoffolie 2 als Trennmittel kann sogar weitgehend auf eine Reinigung der Giessform 1 verzichtet werden.

Wiederverwendbare Giessformen der beschriebenen Art bestehen vorzugsweise aus Metall, es können aber auch andere Materialien wie Kunststoff, Keramik, Glas, Holz etc. eingesetzt werden. Die Materialwahl wird unter anderem durch die erforderliche mechanische Festigkeit beim Ausgiessvorgang und die Erfordernis einer Temperaturbeständigkeit, die abhängig von der Füllstofftemperatur während des Aushärtungsvorganges ist, bestimmt. Sofern die erforderliche mechanischen Stabilität erreicht wird, sind nicht nur längsteilbare, sondern auch anderweitig teilbare, beispielsweise asymmetrisch teilbare Giessformen möglich.

Die Kunststoffolie 2 besteht vorzugsweise aus Polypropylen (PP).

Insgesamt weist die Giessform (1) eine der geometrischen Form der einzugiessenden Teile angepasste und das Volumen der Füllmasse (27) optimierende Formgebung auf. Dies heisst, dass die Giessform möglichst so ausgeformt ist, dass die Stärke der Isolationsschicht um die Kabel zuführungen bzw. sonstigen elektrischen bzw. mechanischen Komponenten überall die minimal erforderlichen Werte erreicht, dass aber möglichst kein unnötiger Materialverbrauch entsteht. Dies natürlich unter Berücksichtigung der ebenfalls minimal erforderlichen mechanischen Festigkeit für die Kabelgarnitur.

Der erforderlichen mechanischen Festigkeit kann durch einen Aufschlag auf die minimal erforderliche Stärke der Isolationsschicht Rechnung getragen werden, der einen konstanten Wert haben kann, jedoch auch in Abhängigkeit von der lokalen Belastung der Muffe veränderlich sein kann. Der Aufschlag kann den minimal erforderlichen Wert beträchtlich übersteigen.

## Patentansprüche

1. Verfahren zur Herstellung einer vergossenen wasserdichten Kabelverbindung mit zwei oder mehr Kabelzuführungen mit einer Giessform (1) und einer in die Giessform einzufüllenden Füllmasse (27), **dadurch gekennzeichnet, dass** die Giessform (1) mehrfach wiederverwendbar ist und nach dem Einfüllen und Aushärten der Füllmasse (27) entfernt wird.

2. Verfahren nach Patentanspruch 1, **dadurch gekennzeichnet, dass** die verwendete Giessform (1) sowie die dazugehörigen Dichtungen (11, 12) aus Materialien bestehen, die mit der Füllmasse (27) keine haftende Verbindung eingehen oder Beschichtungen aufweisen, die mit der Füllmasse (27) keine haftende Verbindung eingehen.

3. Verfahren nach Patentanspruch 1, **dadurch gekennzeichnet, dass** in die Giessform (1) ein Trennmittel eingebracht wird, das einen direkten Kontakt zwischen der Füllmasse (27) und dem Material der Giessform verhindert.

4. Verfahren nach einem der Patentansprüche 1 bis 3, **dadurch gekennzeichnet, dass** für die Kabelzuführungen Dichtungselemente (11, 12) aus elastischem festem Material eingesetzt werden.

5. Verfahren nach einem der Patentansprüche 1 bis 3, **dadurch gekennzeichnet, dass** bei parallelliegenden Kabelzuführungen den Kabelformen angepasste einschiebbare Dichtungselemente (25) aus elastischem kompressiblen Material zwischen die Kabelzuführungen eingesetzt werden.

6. Verfahren nach Patentanspruch 4 oder 5, **dadurch gekennzeichnet, dass** die Dichtungselemente (11, 12) wiederverwendbar sind.

7. Verfahren nach Patentanspruch 6, **dadurch gekennzeichnet, dass** die Dichtungselemente (11, 12) durch Abdekkung mit dem Trennmittel vor einem direkten Kontakt mit der Füllmasse geschützt werden.

8. Verfahren nach Patentanspruch 6 oder 7, **dadurch gekennzeichnet, dass** Dichtungselemente (11, 12) eingesetzt werden, deren Material, Beschichtung und/oder Inhaltstoff die Füllmasse abweist.

9. Verfahren nach Patentanspruch 3 bis 8, **dadurch gekennzeichnet, dass** als Trennschicht eine Kunststoffolie (2) oder eine andere Folie verwendet wird.

10. Verfahren nach Patentanspruch 9, **dadurch gekennzeichnet, dass** eine entsprechend der Innenkontur der Giessform (1) vorgeformte Kunststofffolie oder andere Folie verwendet wird.

11. Verfahren nach einem der Patentansprüche 1 bis 10, **dadurch gekennzeichnet, dass** vor dem Einfüllen der Füllmasse (27) in die Giessform (1) mindestens ein Einsatz eingebracht wird, der ein Mindervolumen der von der Giessform aufgenommenen Kabel zuführungen und/oder elektrischen und/oder mechanischen Komponenten gegenüber einer Referenzausführung der Kabelzuführung und/oder elektrischen und/oder mechanischen Komponenten ausgleicht.

12. Verfahren nach Patentanspruch 11, **dadurch gekennzeichnet, dass** der Einsatz wiederverwendbar ist.

13. Giessform (1) zur Durchführung des Verfahrens nach einem der Patentansprüche 1 bis 12, **dadurch gekennzeichnet, dass** die Giessform (1) eine der geometrischen Form der einzugiessenden Teile angepasste und das Volumen der Füllmasse (27) optimierende Formgebung aufweist.

14. Giessform (1) nach Patentanspruch 13, **dadurch gekennzeichnet, dass** die Innenkontur der Giessform (1) so geformt ist, dass sie überall einen im wesentlichen konstanten Abstand von den aufzunehmenden Kabel zuführungen und/oder elektrischen und/oder mechanischen Komponenten aufweist.

15. Giessform (1) nach Patentanspruch 14, **dadurch gekennzeichnet, dass** der Abstand im wesentlichen der minimal erforderlichen Stärke der Isolationsschicht oder der minimal erforderlichen Stärke der Isolationsschicht zuzüglich einem Aufschlag entspricht.

16. Giessform (1) nach einem der Patentansprüche 13 bis 15, **dadurch gekennzeichnet, dass** die Giessform aus zwei oder mehr zusammensetzbaren und/oder gelenkig zusammenklappbaren Teilformen oder Formhälften (3, 4) besteht.

17. Giessform (1) nach Patentanspruch 16, **dadurch gekennzeichnet, dass** die Teilformen oder Formhälften (3, 4) an einem Rand über mindestens ein Steckscharnier (14) miteinander klappbar verbunden sind.

18. Giessform (1) nach Patentanspruch 16 oder 17, **dadurch gekennzeichnet, dass** das Steckscharnier durch ein Verriegelungselement gesichert ist, nach dessen Betätigung eine Trennung der Teilformen oder Formhälften (3, 4) voneinander möglich ist.

19. Giessform (1) nach einem der Patentansprüche 13 bis 17, **dadurch gekennzeichnet, dass** die Teilformen oder Formhälften (3, 4) an mindestens einem Rand über einen Klemmverschluss (21) und/oder über angelenkte Verbindungshaken miteinander verbindbar sind.

20. Giessform (1) nach einem der Patentansprüche 16 bis 19, **dadurch gekennzeichnet, dass** sie mehrteilige Dichtungselemente (11, 12) eingesetzt hat, deren Teile jeweils einer Teilform oder Formhälfte (3, 4) zugeordnet ist.

21. Giessform (1) nach einem der Patentansprüche 16 bis 20, **dadurch gekennzeichnet, dass** aussen am Rand der Teilformen oder Formhälften (3, 4) Noppen (23) oder andere Vorsprünge vorhanden sind, an denen die Kunststofffolie (2) oder eine andere Folie mittels Aussparungen (24) in aus den Teilformen oder Formhälften (3, 4) herausstehenden Abschnitten fixierbar ist.

22. Giessform (1) nach einem der Patentansprüche 16 bis 20, **dadurch gekennzeichnet, dass** die Giessform (1) Perforationen (26) oder Lüftungskanäle für eine Entlüftung ihres Innenraumes aufweist.

23. Vergossene Kabelverbindung, hergestellt nach dem Verfahren gemäss einem der Patentansprüche 1 bis 12, **dadurch gekennzeichnet, dass** sie keine an der vergossenen Kabelverbindung verbleibende Giessform (1) aufweist.
